# EUROPEAN PATENT APPLICATION

(11) **EP 4 523 775 A1**
(43) Date of publication of application: **19.03.2025**
(21) Application number: 23306517.6
(22) Date of filing: 13.09.2023
(51) Int. Cl.: B01D 61/42, B01D 65/08

(54) **METHOD FOR CLEANING A SELECTIVE MEMBRANE AND CORRESPONDING SYSTEMS**

(71) Applicant: Centre National de la Recherche Scientifique, 75016 Paris (FR); Ecole Normale Supérieure, 75005 Paris (FR); Sorbonne Université, 75006 Paris (FR); Université Paris Cité, 75006 Paris (FR)
(72) Inventor: ABDELGHANI IDRISSI, Soufiane, Paris (FR); RIES, Lucie, Paris (FR); SIRIA, Alessandro, Paris (FR); BOCQUET, Lyderic, Paris (FR)
(74) Representative: Brevalex

(57) **Abstract**

A method for cleaning a porous separation membrane, comprises the following steps :
- providing an electro-osmotic membrane ;
- juxtaposing, preferably contacting, the porous separation membrane to be cleaned with the electro-osmotic membrane ;
- contacting the porous separation membrane and the electro-osmotic membrane with a volume of an electrolyte ;
- interposing the electro-osmotic membrane or the electro-osmotic membrane and the porous separation membrane between a first electrode and a second electrode contacting each the volume of electrolyte ; and
- applying an alternating electrical field between the first and second electrodes to induce a back and forth movement of the electrolyte through the porous separation membrane.

The invention also relates to systems implementing this method.

## Description

### FIELD OF THE INVENTION

The present invention relates to a method for cleaning a selective membrane and corresponding systems.

### BACKGROUND OF THE INVENTION

Various techniques are currently available to limit the impact of polarization, scaling and membrane fouling in membrane separation processes.

The cross-flow technique, most widely used, consists of applying a flow parallel to the membrane (i.e. perpendicular to the filtration flow). In this way, the boundary layers - where ions accumulate - are partly flushed out. However, the energy consumption of the cross-flow required to evacuate the very thin layers (which are the most limiting) is not energy-efficient. As a result, this technique can currently only partially limit the harmful effects of polarization, scaling and fouling.

Intensive pre-treatment of liquids before passing through the membrane is generally carried out to limit fouling. Pre-treatment can take the form of pre-filtration or chemical treatment. These steps are very costly and can severely degrade membranes (i.e. the chlorine often used for water pre-treatment as an anti-bacteriological agent severely degrades a wide range of membrane materials).

Mechanical cleaning techniques are also used to clean membranes during processes (e.g. back flushing). These generally involve process discontinuity, high costs, limited efficiency, and may alter the mechanical stability of the membranes.

US201010089829 discloses in this respect a membrane cleaning apparatus and a membrane cleaning method wherein an electric field is applied around the membrane during the back flushing to temporarily change the state of the membrane and enlarge the pores in the membrane to further improve the performance of back flushing and overcome the problems due to pore plugging, bio-fouling and membrane scaling.

WO2010/143945 discloses another method for membrane cleaning and a device wherein this method can be applied. The method comprises the steps of operating a device for performing an electro-membrane process and applying inverse electrical pulses to the device. Between or during the pulses, alternating or fluctuating current and /or voltage can be applied.

The method and device of this prior art document are focused on ion exchange membranes (for electro-dialysis , reverse electro-dialysis, membrane capacitive de-ionisation or microbial fuel cells).

Accordingly there exists a significant need for further improvements in the cleaning of selective membranes.

The present invention has been devised with the foregoing in mind.

### SUMMARY OF THE INVENTION

According to a first aspect of the present invention, there is provided a method for cleaning a porous separation membrane, comprising the following steps :
- providing an electro-osmotic membrane ;
- juxtaposing, preferably contacting, the porous separation membrane to be cleaned with the electro-osmotic membrane ;
- contacting the porous separation membrane and the electro-osmotic membrane with a volume of an electrolyte ;
- interposing the electro-osmotic membrane or the electro-osmotic membrane and the porous separation membrane between a first electrode and a second electrode contacting each the volume of electrolyte ; and
- applying an alternating electrical field between the first and second electrodes to induce a back and forth movement of the electrolyte through the porous separation membrane.

Thanks to the back and forth pumping effect of the electrolyte through the separation membrane obtained with the electro-osmotic pump formed by the electro-osmotic membrane to which is applied an alternating electrical field, the invention makes it possible to move thin layers (nanometric and lower at more distant areas from the surface than with the prior art techniques, which makes it possible to reduce the limitation of overall performance linked to significant concentration gradients, and to drastically increase the characteristic fouling time but also the characteristic polarization time.

These two points have immediate consequences of strong reduction in OPEX and CAPEX costs. In particular, the lifespan of the membranes is increased and the energy consumption of the processes is reduced.

In addition, the invention enables to reduce or dispense with the use of chemical products.

The invention also has the advantage of being able to be carried out during operation of a device, thus directly improving performance.

Conversely, it does not require to be associated with another conventional cleaning technique,such as a back flushing, although it is not excluded, for the benefit of an improved back flushing technique : lower flushing flows and hence lesser impact on the membrane and less expensive technique.

This method can moreover be used on any type of membrane and for any type of process in which it is possible to apply an electric field.

The membrane can in particular be any type of liquid filtration/purification selective membrane, ie whatever the size of its pores, the geometry of the membrane, the type of molecules to be extracted by size effect or the nature of the liquid to be purified.

As used herein, the term « selective membrane » hence refers to a (i) selectively permeable membrane, ie a membrane that allows only specific solutes pass through while blocking others, (ii) a permeable membrane, ie a membrane wherein both solutes and solvent molecules are allowed to pass through or (iii) a semipermeable membrane, ie a membrane which only lets solvents, such as water, pass through it.

The associated process can be a membrane separation process, such as e.g. microfiltration, ultrafiltration, nanofiltration, forward osmosis, reverse osmosis, electromembrane processes (e.g. electrodialysis, capacitive deionization, electrodeionization) or membrane distillation. It can in particular be a static filtration process or a crossflow filtration process .

The associated process can be a membrane-based energy production process, such as e.g. osmotic energy generation, pressure retarded osmosis, reverse electrodialysis. It can in particular be a static power generation process or a crossflow power generation process .

More generally, the method of the present invention can also be used for cleaning porous membranes used as separators in an accumulator (Batteries / electrochemical storage systems) or fuel cells. Indeed, concentration polarisation appears in these processes, and the decomposition products of the electrolyte used in these systems can easily clog the pores of the membranes implemented in the latter.

Due to its versatility in terms of applications, the present invention presents a strong technological advantage since it is modular and applicable to a wide range of processes. It can also have a significant impact on the recycling of end-of-life membranes, in particular in the field of accumulators.

As used herein, the term « electrolyte » refers to a liquid containing mobile ions, including deionized water, which can be implemented in the method according to the present invention thanks to the presence of oxonium ions.

As used herein, the term « electro-osmotic membrane » does not deviate from the conventional meaning of the term in the field of filtration membranes , and refers to a membrane that implements the electro-kinetic phenomenon of electro-osmosis : an electrical field is used to pump a fluid through the membrane by using surface charges on the membrane.

As used herein, the term « alternating electric field » refers to any electric signal which oscillate between positive and negative value of any shape such as sinusoidal, pulse or triangular.

According to a particular embodiment, the method comprises the following steps for cleaning a porous separation membrane in the form of a selective membrane of a membrane separation process, while operating the process:
- contacting a first side of an electro-osmotic assembly comprising the first and second electrodes, the selective membrane and the electro-osmostic membrane with a first electrolyte solution containing a solute of interest in a first concentration ;
- contacting a second side of the electro-osmotic assembly with a second electrolyte solution containing the same solute of interest or another solute of interest in a second concentration, being lower, equal or higher than the first concentration;
- applying a pressure difference, and/or a temperature difference, and/or a chemical potential difference and/or an electrical field to induce a flow of the solvent from one electrolyte solution to the other electrolyte, through the selective membrane ;and
- applying an alternating electrical field between the first and second electrodes to induce a back and forth movement of the electrolyte through the porous separation membrane.

The electrolytes can be any electrolyte solution containing at least one solute of interest/undesired solute in a solvent. Electrolytes can also be pure water, in this case the electro-osmotic water flow will be generated by proton transport at the surface of the pores of the electro-omotic membrane.

The application of a pressure difference refers in particular to the conventional use of a mechanical pump in processes such as microfiltration , ultrafiltration , nanofiltration, reverse osmosis, or pressure retarded osmosis.

The application of a temperature difference refers in particular to membrane distillation processes.

The application of a chemical potential difference refers in particular to processes such as forward osmosis, reversed electrodyalisis or osmotic energy generation.

The application of an electric field refers in particular to electro-membrane processes such as electroosmosis, capacitive deionisation, electrodeionization and more particularly reverse electroosmosis,and electrodialysis.

The alternating electrical field used for the cleaning is the same as the alternating electrical field used for operating the process or a different one.

In an alternative embodiment, the electrical field used for operating the process is a constant electrical field and the alternating electrical field is applied by pulses alternating with the constant electrical field or superimposed on the constant electrical field.

In an alternative embodiment, the electrical field used for operating the process is an alternating electrical field and the alternating electrical field is applied by pulses alternating with the alternating electrical field or superimposed on the alternating electrical field.

In some embodiments, the alternating electrical field used for the cleaning is superimposed continously or sequentially to the pressure difference, and/or temperature difference, and/or chemical potential difference and/or electrical field used during the process operation.

In some embodiments, the electrical fields used for the cleaning and for operating the process are applied between the same electrodes.

In some embodiments, the alternating electrical field is applied for the entire duration of the operation of the process, at certain times of the operation of the process or when the process is stopped.

In some embodiments, the method comprises the following steps for cleaning a porous separation membrane in the form of a selective membrane of a membrane energy storage process and/or energy production process, while operating the process:
- contacting a first side of an electro-osmotic assembly comprising the first and second electrodes, the selective membrane and the electro-osmostic membrane with a first electrolyte solution containing a solute of interest in a first concentration ;
- contacting a second side of the electro-osmotic assembly with a second electrolyte solution containing the same solute of interest in a second concentration, lower or higher than the first concentration or having the same concentration;
- applying a pressure difference, and/or a temperature difference, and/or a concentration difference and/or an electrical field and/or injecting a reactant to induce an electrical current; and
- applying an alternating electrical field between the first and second electrodes to induce a back and forth movement of the electrolyte through the porous separation membrane

In some embodiments , the alternating electrical field has an amplitude in the range of 0,1 mV to 100 V, preferably in the range of 1mV to 10V.

In some embodiments, the alternating electrical field has a frequency in the range of 1mHz to 1kHz, preferably in the range of 1mHz to 500Hz, more preferably in the range of 0,01 Hz to 5Hz.

In some embodiments implementing the pulses, the electrical field pulse has a duration in a range of 1ms to 10h, preferably in a range of 100 ms to 10s.

In some embodiments implementing the pulses, the frequency of the electrical field pulse is in the range of 1mHz to 1kHz, preferably in the range of 0.1 Hz to 10 Hz.

More generally, the alternating electrical field is applied throughout the operation of the process or less depending on the specific features of this process.

According to another aspect of the invention, there is provided a filtration system comprising at least one selective membrane, means configured for inducing a flow of a solvent from one electrolyte solution to another electrolyte solution through said at least one selective membrane, and means configured for cleaning, preferably during the operation of the filtration system, said at least one selective membrane by a method as defined in anyone of the preceding claims.

According to some embodiments, the system comprises a filtration cartridge comprising at least one electro-osmotic membrane or at least one electro-osmotic assembly comprising a selective membrane and an electro-osmotic membrane,wound in a spiral around a central perforated tube, and at least one spacer defining flow passages allowing an electrolyte that has entered the cartridge to flow tangentially along the at least one electro-osmotic membrane to the at least one selective membrane and the solvent of the electrolyte that has passed through the the at least one electro-osmotic membrane or the at least one selective membrane to be collected and fed to the central tube.

According to some embodiments, (i) the first and second electrodes are layers coated or assembled on both sides of said at least one electro-osmotic membrane or (ii) the first electrode is coated or assembled on one side of the electro-osmotic membrane and the second electrode is coated or assembled on one side of the selective membrane.

According to some embodiments, the at least one selective membrane is a microfiltration, ultrafiltration, nanofiltration or reverse osmosis membrane.

The use of the word "a" or "an" when used in conjunction with the term "comprising" in the claims and/or the description may mean "one," but it is also consistent with the meaning of "one or more," "at least one," and "one or more than one."

The term "and/or" means that the terms before and after can be taken together or separately. For illustration purposes, but not as a limitation, "X and/or Y" can mean "X" or "Y" or "X and Y".

The word "comprise" and variations of the word, such as "comprising" and "comprises" as well as "have," "having," "includes," and "including," and variations thereof, means that the named steps, elements, or materials to which it refers are essential, but other steps, elements, or materials may be added and still form a construct within the scope of the disclosure. When recited in describing the invention and in a claim, it means that the invention and what is claimed is considered to be what follows and potentially more. These terms, particularly when applied to claims, are inclusive or open-ended and do not exclude additional, unrecited elements or method steps.

### BRIEF DESCRIPTION OF THE DRAWINGS

Further advantages, features and details of the invention are elucidated on a basis of preferred embodiments thereof, wherein reference is made to the accompanying drawings wherein :
- Figure 1 schematically shows an exemplary purification system according to the present invention, involving an electro-osmotic membrane as a porous separation membrane ;
- Figures 2A-2D schematically show different possible arrangements of the electrodes, electro-osmotic membrane and selective membrane ;
- Figure 3 schematically shows an exemplary purification system involving a spiral wound geometry;
- Figure 4 illustrates the performances of the purification system of figure 1 ; and
- Figures 5 A to 5F schematically show different possible arrangements of the electrodes, electro-osmotic membrane, selective membrane and spacers of a spiral wound geometry.

### DETAILLED DESCRIPTION OF CERTAIN PREFERRED EMBODIMENTS OF THE INVENTION

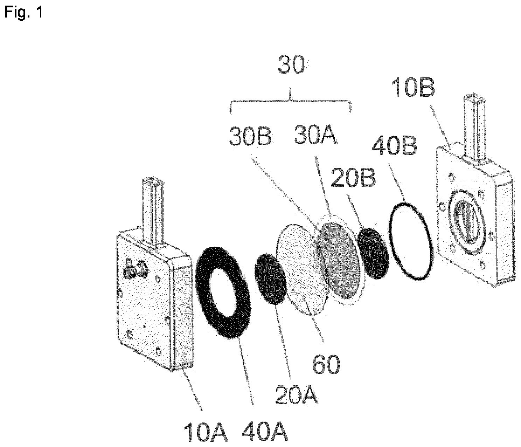

A system for purifying an electrolyte solution is shown on figure 1 and comprises:
- a first vessel 10A receiving a first volume of a first electrolytic solution comprising a solute and a solvent;
- a second vessel 10B receiving a second volume of a second electrolyte solution comprising a solvent;
- a first electrode 20A in contact with the first electrolyte solution ;
- a second electrode 20B in contact with the second electrolyte solution ;
- an asymmetric membrane 30 comprising a semi-permeable sub-membrane 30A and an electro-osmotic sub-membrane 30B;
- a separator 60 positioned between the electrode 20A and the charged sub-membrane 30B of the asymmetric membrane 30; and
- a rubber flat seal 40A and one rubber thoric seal 40B.

The first and the second electrodes 20A and 20B are porous electrodes, grid electrode or any geometry wherein the electrolyte can diffuse through it.

The first and second electrodes 20A and 20B may be operatively coupled to a source of electrical power via two current collectors (not shown on figure 1), so that an alternating electric field may be applied between the first and second electrodes 20A and 20B.

The term "solute" refers here to a liquid or solid material that dissolves in the solvent used in the electrolyte solutions. Solid solutes may be selected from solid particles, organic or inorganic small molecules such as dye complexes, biomolecules such as hormones (e.g., testosterone), proteins, polysaccharides, polynucleotides, polypeptides, enzymes or antibodies, or salts/ions (such as NaCl, LiCl, Na2SO4). Liquid solutes may be organic acids, alcohols, or hexanes.

The solutes may be present in wastewater, industrial production waters, landfill leachates or seawater to be desalinated.

The term "electrolyte solution" refers here to an electrically conducting solution containing mobile ions, such as ions derived from dissolved salts as NaCl, KCI, CaCl₂ or MgCl₂, which induces electro-osmose.

The electro-osmotic membrane 30B displays an transport of water over a cycle from one side of the separation membrane or the membrane assembly to the other.

Semipermeable sub-membranes useable in the context of the purification system of figure 1 may be any semipermeable sub-membrane known in the art.

Advantageously, the semipermeable sub-membrane 30A may be a size exclusion membrane, an ion exchange membrane, or any other membrane allowing the separation/filtration of particular molecules or ions from a given electrolyte solution (for example semipermeable sub-membranes based on separation by chemical affinity), advantageously a size exclusion membrane or ion exchange membrane. For example, it may be a semipermeable sub-membrane which separates pure water molecules from salts and other impurities: a membrane that has permeability to water and relative impermeability to various dissolved impurities including dissolved salts, organics, bacteria, and pyrogens and other small molecules. As such, it may be a semipermeable sub-membrane conventionally used in water purification technology that uses a semipermeable sub-membrane to remove ions, molecules, and larger particles from contaminated water. It may be a semipermeable sub-membrane for use in water purification or desalination systems, in reverse osmosis systems, such as thin film composite membranes (TFC or TFM). Membranes used in reverse osmosis are, in general, made out of polyamide, chosen primarily for its permeability to water and relative impermeability to various dissolved impurities including salt ions and other small molecules that cannot be filtered. In yet another example, the semipermeable sub-membrane 30A may be an anion exchange membrane (AEM) or a cation exchange membrane CEM). For example, the semipermeable sub-membrane element 30A may be a Nafion semipermeable sub-membrane.

Charged sub-membranes useable in the context of the present invention may be any charged membrane known in the art.

Advantageously, the electroosmotic sub-membrane comprises a surface charge with a zeta potential greater than or equal to 5 mV, preferably greater than or equal to 20 mV, even more preferably greater than or equal to 50 mV.

The underlying principle is that the electro-osmotic membrane bears a sufficient surface charge (which may be positive of negative) to induce a zeta potential at the membrane/electrolyte solution interface, that is sufficiently high to induce the flow of anions or cations, respectively, through the nanochannels of the electro-osmotic sub-membrane, upon application of a suitable alternating electrical field between electrodes 20A and 20B.

When the electro-osmotic sub-membrane carries a positive surface charge, the application of an positive direct electric field between electrodes 20A and 20B, where electrode 20B, in contact with the electrolyte solution of the second vessel 10B is positively charged, will induce the flow of anions in this electrolyte solution from the positively charged pore surface of the charged sub-membrane 30B towards electrode 20B. This anion flow concomitantly induces the flow of the solvent from the first vessel 10A towards the second vessel 10B, through the membrane assembly30formed by the electro-osmotic membrane and the selective membrane . When reversing the direct electric field polarity the flow of solvent will inverse from the second vessel toward the first vessel. Hence the application of an alternating electric field between electrodes 20A and 20B, will induce a solvent back and forth movement through the electro-osmotic membrane or the membrane assembly.

Conversely, when the electro-osmotic sub-membrane carries a negative surface charge, the application of an direct positive electric field between electrodes 20A and 20B, where electrode 20B, in contact with the electrolyte solution of the second vessel 10B is negatively charged, will induce the flow of cations in this electrolyte solution from the negatively charged pore surface of the charged sub-membrane element 30B towards electrode 20B. This cation flow concomitantly induces the flow of the solvent from the first vessel 10A towards the second vessel 10B, membrane assembly or through the electro-osmotic membrane and the selective membrane 30.

Since the membrane assembly 30 comprises a semipermeable sub-membrane element 30A, which is selective for one or more particular solute(s) present in the first electrolyte solution, the flow of cations generated in the pores of the electro-osmotic sub-membrane 30B induces the flow of the solvent from vessel 10A to vessel 10B, while preventing the solute(s) from passing through (the solute(s) get filtered out and stay in vessel 10A).

In a variant, the electro-osmotic sub-membrane 30B is in contact with the second electrolytic solution comprising a solvent.

In a variant, the electro-osmotic sub-membrane 30B is in contact with the first electrolytic solution comprising a solventand a solute.

Applying the alternating electrical field between the electrodes 20A and 20B moreover induces a back and forth movement of the solvent through the membrane assembly membrane 30 , which cleans the selective membrane efficiently during operation of the purifying system and has also the advantage to avoid any effects due to charge polarization or electrode saturation.

The semipermeable sub-membrane 30A is preferably superimposed with the charged sub-membrane 30B. The semipermeable sub-membrane may be placed directly on the charged sub-membrane element 30B, or may be first placed on another porous support layer (for ease of manufacture and/or handling, for example) before being placed on the charged sub-membrane 30B, as previously described.

As used herein, the separator 60 may be independently organic, inorganic or insulating composite. It allows to protect the membrane 30 from any mechanical deformation when closing the purification system and prevents from any shortcut in case the membrane gets damaged during the process

The separator 60 should have a much greater pore size, to allow the permeation of the flow of the solvent of the electrolyte solution from vessel 10A to vessel 10B, through the membrane assembly 30. As such, the separator 60, preferably may have a pore size at least X5, X10, or greater, than the pore size of the semipermeable sub-membrane 30A.

The first and second electrodes 20A and 20B may be any metal or carbon electrodes and can have a capacitive effect. Suitable metal electrodes include Zn, Fe, Pt, Ag or Au electrodes. Suitable carbon electrodes include carbon-paste electrodes, glassy carbon electrodes, graphite or graphitic carbon electrodes, or any carbon electrodes used in salt batteries. Advantageously, the first and second electrodes 20A and 20B may be platinum electrodes. Preferably, the first and second electrodes 20A and 20B may be carbon electrodes (the advantage being that it allows to operate the purification system according to the present invention under a large range of voltages with showing limited catalysis of parasite electrochemical reactions (in the order of 0.1 V - 1 kV, preferably between 0.1 V - 100 V and more preferably between 1 V - 50 V).

The electrical energy is generated by a device delivering only DC voltages and coupled to a DC/AC converter or by a device delivering an alternating electrical signal.

Advantageously, the first and the second vessels may also be configured to evacuating bubbles generated during parasitic electrochemical reactions by the Venturi effect, e.g. with an outlet pipe (not shown on the figures).

The solvent of the first electrolyte solution and the solvent of the second electrolyte solution may be identical or different.

Advantageously, the solvent of the first electrolytic solution and the solvent of the second electrolytic solution are independently selected from polar solvents or apolar solvents. Preferably, the solvent of the first electrolytic solution and the solvent of the second electrolytic solution are independently selected from water, one or more organic solvents or a mixture thereof.

In a variant, the electro-osmotic filtration/purification system according to the present invention may be configured in plural numbers. In other words, the unit "vessel 10A-membrane assembly 30-vessel 10B" may be configured in multiple stages.

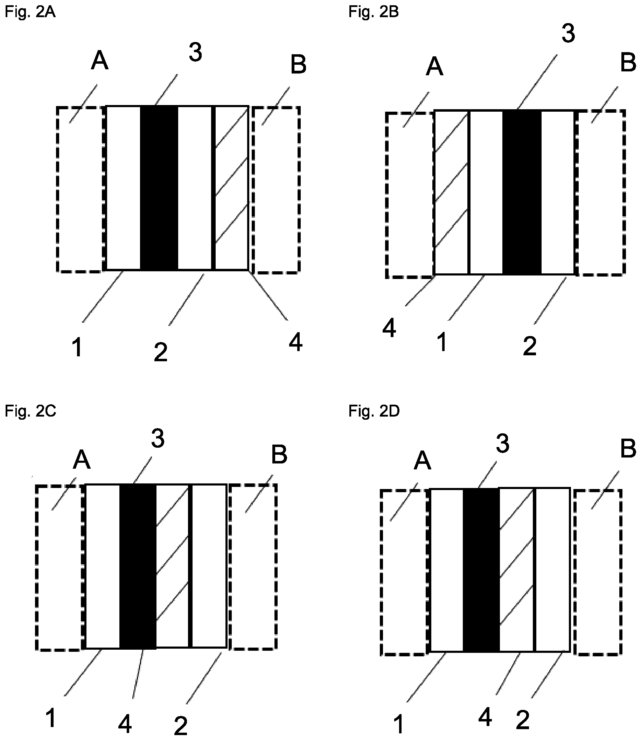

Figures 2A to 2C show different possible arrangements of the electrodes and the membranes.

In the case of figures 2A and 2B, the electrodes 1 and 2, corresponding to electrodes 20A and 20B of figure 1, are placed on both sides of the electro-osmotic membrane 3 and the selective membrane 4 is placed on one of the electrodes ( 2 on figure 2A and 1 on figure 2B).

In the variants of figures 2C and 2D, the electrodes 1 and 2 are placed on both sides of an assembly comprising the electro-osmotic membrane 3 and the selective membrane 4.

The first and second vessels A and B are placed on both sides of the resulting assemeblies.

As can also be seen on those figures , the electrodes 1,2 and membranes 3,4 are here in contact with each other. In other arrangements, the different elements can be arranged one next to the other without being in contact.

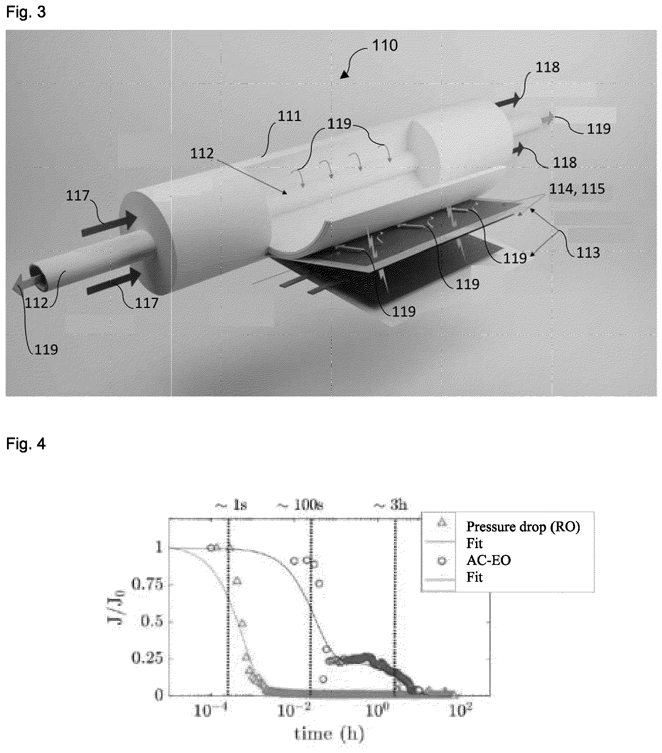

The present invention as shown on figure 3 is directed to a water purification system 100 comprising a reverse electro-osmotic filtration system in a spiral wound geometry.

The system comprises a filtration cartridge 110 having a cylindrical container 111 concentrically surrounding a central perforated tube 112. A plurality of filtration membranes 113 alternating with electrodes 114,115 coated on the membranes 113 are wound in spiral around the central tube 112 and between the latter and the outer cylindrical container 111.

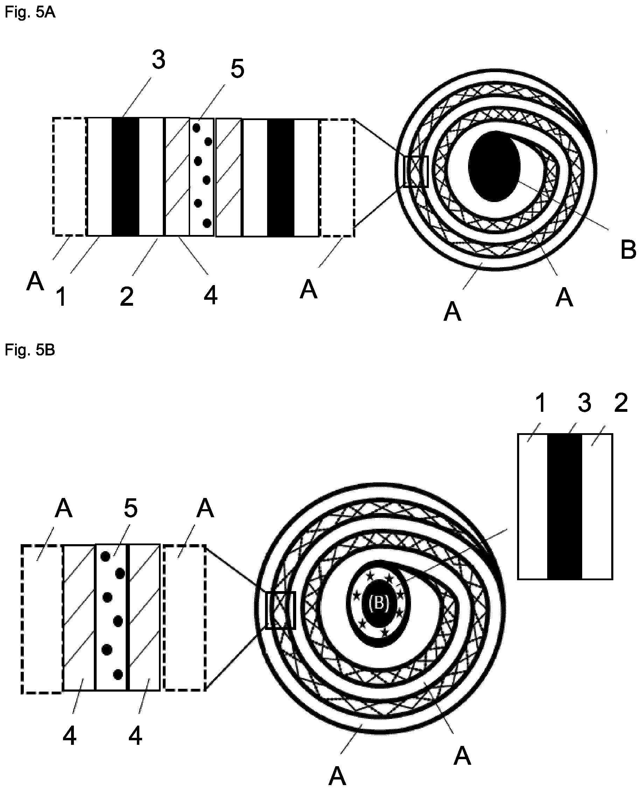

As in conventional filtration cartridges having a spiral wound geometry the system moreover comprises spacers (not visible on figure 3 but described below with reference to figures 5A to F) defining flow passages allowing the water to be purified that has entered the cartridge 110 to flow tangentially along the filtration membranes 113 and the purified water that has passed through the selective membranes 113 be collected and fed to the central tube 112.

The water to be purified (feed water) enters the cartridge 110 at one of its axial ends (arrows 117) and is divided inside the cartridge by the application of a motive force (i.e. temperature-, pressure-, concentration gradient or electric field depending on the process)114,115 into a permeate flow (purified water) passing through the membranes and a retentate flow (arrows 118) getting out of the cartridge at the second of its axial ends (between the central tube 112 and the outer cylindrical container 111).

The permeate then gets out of the cartridge 110 through both end orifices of the central tube (arrows 119).

Here again, thanks to the application of an alternating electrical field according to the invention, the electro-osmotic membranes 113 are efficiently cleaned by the back and forth movement of the permeate.

By purifying water, water purification, it is generally meant any operation consisting in treating a water containing impurities at an initial content such that at the end of this operation, the final content of impurities is lower than the initial content. By impurity, it is meant any element, molecule, ion, or other, different from the elements constituting pure water, that is H2O, OH-, and H+. This purification process may be, for example, a process for desalinating for example sea water, a process for treating industrial production waters, or a process for treating landfill leachates.

The solute-containing electrolyte solution may also be a biological fluid, preferably dialysis fluids. As such, the present invention is also directed to an implantable artificial kidney comprising a any filtration system according to the present invention, in any variant described herein.

More generally, the present invention relates to water purification systems, water desalination systems, systems implementing membrane energy storage processes and/or energy production processes, which implement the cleaning method as described above.

Comparative results are shown on figure 4.

The system corresponds to the filtration through a porous membrane of a solution contaminated by an ionic pollutant. Two situations are compared:
- A flow by pressure field.
- A flow by electric field (electro-osmosis).

As can be seen the flow induced by electro-omosis (AC-EO) presents polarization/fouling time constants much slower than conventional flow under pressure (RO) .

The first drop in flow corresponds to the creation and development of the parasitic layer. In the case of a flow under pressure, this first clogging/polarization dynamic is of the order of a few seconds. For AC-EO, this is of the order of 100s, demonstrating the capacity of AC-EO to slow down polarization and fouling dynamics. In addition, AC-EO makes it possible to maintain a non-zero flow rate (about 25% of the initial flow rate Jo) for more than 3 hours; while the case of flow under pressure maintains only about1 % of the initial flow rate after 1 minute of experience.

In a manner similar to figures 2A to 2D, figures 5 A to 5F schematically show different possible arrangements, in planar and wound configurations, of the electrodes, electro-osmotic membrane, selective membrane and spacers of a spiral wound geometry, such as the one implemented in the system of figure 3.

Reference numerals 1 and 2 refer to the first and second electrodes, 3 to the electro-osmotic membrane, 4 to the selective membrane, 5 to a spacer, A to a feed reservoir and B to the perforated tube collecting the permeate.

Figure 5A : The first and the second electrodes are around the electroosmotic membrane, and the overall {electrode1/electro-osmotic membrane or pump 3/electrode2} is juxtaposed to the selective membrane 4.

Figure 5B : The first and the second electrodes are around the electroosmotic membrane 3 and the overall {electrode1/Electro-osmotic membrane 3/electrode2} is inside the perforated tube .

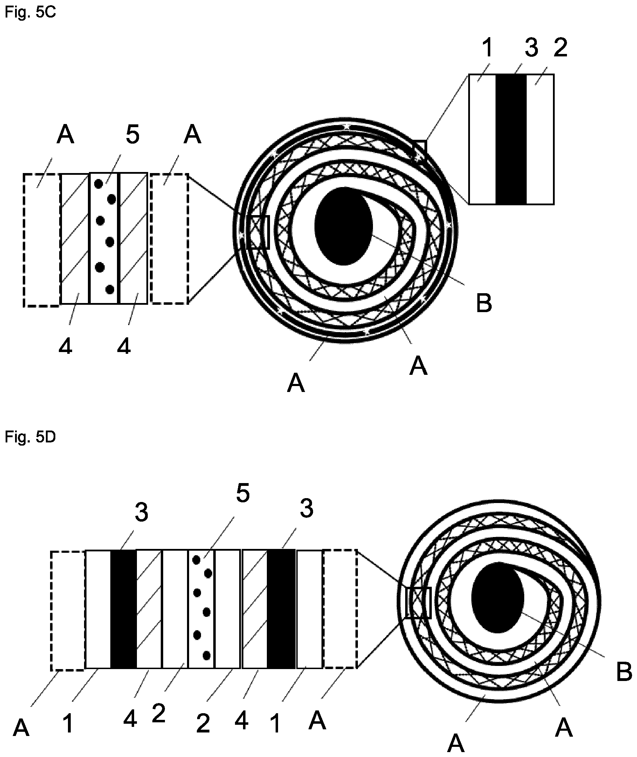

Figure 5C : The first and the second electrodes are around the electroosmotic membrane and the overall {electrode1/Electro-osmostic membrane 3/electrode2} is wraped outside the spiral wound element.

Figure 5D : The electro-osmotic membrane and the selective membrane are juxtaposed. The first and second electrodes are around this assembly {electroosmotic membrane+selective membrane}, the first electrode being soaked in the permeate and the second electrode being soaked in the feed.

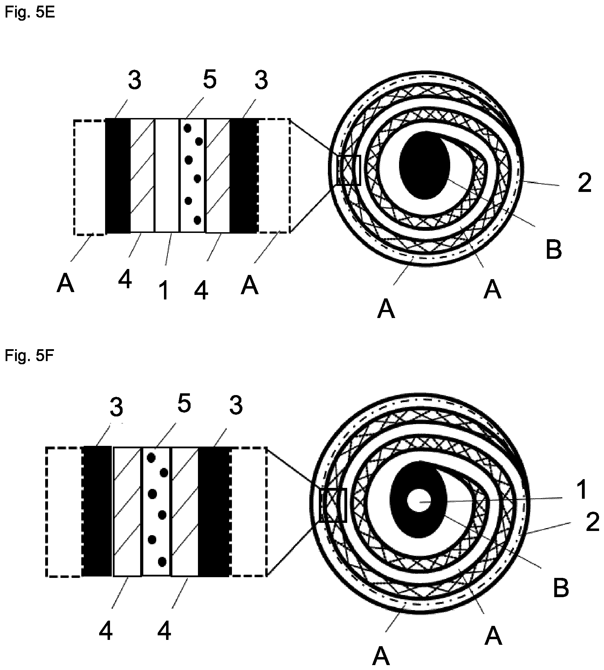

Figure5E : The electro-osmotic membrane and the selective membrane are juxtaposed. The first electrode is juxtaposed to this assembly and to the spacer (soaked in the permeate) and the second electrode is outside the spiral wound assembly (soaked in the feed solution).

Figure 5F : The electro-osmotic membrane and the selective filter are juxtaposited. The first electrode is inside the perforated tube wherein the permeate solution flow (soaked in the permeate), the second electrode is outside the spiral wound assembly soaked in the feed solution.

The present invention is by no means limited to the above described embodiments thereof. The rights sought are defined by the following claims , within the scope of which many modifications can be envisaged.

## Claims

1. Method for cleaning a porous separation membrane, comprising the following steps :
- providing an electro-osmotic membrane ;
- juxtaposing, preferably contacting, the porous separation membrane to be cleaned with the electro-osmotic membrane ;
- contacting the porous separation membrane and the electro-osmotic membrane with a volume of an electrolyte ;
- interposing the electro-osmotic membrane or the electro-osmotic membrane and the porous separation membrane between a first electrode and a second electrode contacting each the volume of electrolyte ; and
- applying an alternating electrical field between the first and second electrodes to induce a back and forth movement of the electrolyte through the porous separation membrane.

2. Method according to claim 1,comprising the following steps for cleaning a porous separation membrane in the form of a selective membrane of a membrane separation process, while operating the process:
- contacting a first side of an electro-osmotic assembly comprising the first and second electrodes, the selective membrane and the electro-osmostic membrane with a first electrolyte solution containing a solute of interest in a first concentration ;
- contacting a second side of the electro-osmotic assembly with a second electrolyte solution containing the same solute of interest or another solute of interest in a second concentration, being lower, equal or higher than the first concentration;
- applying a pressure difference, and/or a temperature difference, and/or a chemical potential difference and/or an electrical field to induce a flow of the solvent from one electrolyte solution to the other electrolyte, through the selective membrane ;and
- applying an alternating electrical field between the first and second electrodes to induce a back and forth movement of the electrolyte through the porous separation membrane.

3. Method according to claim 1, comprising the following steps for cleaning a porous separation membrane in the form of a selective membrane of a membrane energy storage process and/or energy production process, while operating the process:
- contacting a first side of an electro-osmotic assembly comprising the first and second electrodes, the selective membrane and the electro-osmostic membrane with a first electrolyte solution containing a solute of interest in a first concentration ;
- contacting a second side of the electro-osmotic assembly with a second electrolyte solution containing the same solute of interest in a second concentration, lower or higher than the first concentration or having the same concentration;
- applying a pressure difference, and/or a temperature difference, and/or a concentration difference and/or an electrical field and/or injecting a reactant to induce an electrical current; and
- applying an alternating electrical field between the first and second electrodes to induce a back and forth movement of the electrolyte through the porous separation membrane

4. Method according to claim 2 or 3, wherein the alternating electrical field used for the cleaning is the same as the alternating electrical field used for operating the process.

5. Method according to claim 2 or 3,wherein the electrical field used for operating the process is a constant electrical field and the alternating electrical field is applied by pulses alternating with the constant electrical field or superimposed on the constant electrical field.

6. Method according to claim 2 or 3, wherein the electrical field used for operating the process is an alternating electrical field and the alternating electrical field is applied by pulses alternating with the alternating electrical field or superimposed on the alternating electrical field.

7. Method according to claim 2 or 3, wherein the alternating electrical field used for the cleaning is superimposed continously or sequentially to the pressure difference and/or temperature difference and/or chemical potential difference and/or electrical field and/or reactant injection used during the process operation.

8. Method according to anyone of claims 2 to 7,wherein the electrical fields used for the cleaning and for operating the process are applied between the same electrodes.

9. Method according to anyone of claims 2 to 8, wherein the alternating electrical field is applied for the entire duration of the operation of the process, at certain times of the operation of the process or when the process is stopped.

10. Method according to anyone of claims 1 to 9, wherein the alternating electrical field has an amplitude in the range of 0,1mV to 100 V, preferably in the range of 1mV to 10V.

11. Method according to anyone of claims 1 to 10, the alternating electrical field has a frequency in the range of 1mHz to 1kHz, preferably in the range of 1mHz to 500Hz, more preferably in the range of 0,01Hz to 5Hz.

12. Method according to claim 5 or 6, wherein the electrical field pulse has a duration in a range of 1ms to 10h, preferably in a range of 100 ms to 10s and/or the frequency of the electrical field pulse is in the range of 1mHz to 1kHz, preferably in the range of 0.1 Hz to 10 Hz.

13. Filtration system comprising at least one selective membrane, means configured for inducing a flow of a solvent from one electrolyte solution to another electrolyte solution through said at least one selective membrane, and means configured for cleaning, preferably during the operation of the filtration system, said at least one selective membrane by a method as defined in anyone of the preceding claims.

14. System according to claim 13, comprising a filtration cartridge comprising at least one electro-osmotic membrane or at least one electro-osmotic assembly comprising a selective membrane and an electro-osmotic membrane,wound in a spiral around a central perforated tube, and at least one spacer defining flow passages allowing an electrolyte that has entered the cartridge to flow tangentially along the at least one electro-osmotic membrane to the at least one selective membrane and the solvent of the electrolyte that has passed through the the at least one electro-osmotic membrane or the at least one selective membrane to be collected and fed to the central tube.

15. System according to claim 13 or 14, wherein (i) the first and second electrodes are layers coated or assembled on both sides of said at least one electro-osmotic membrane or (ii) the first electrode is coated or assembled on one side of the electro-osmotic membrane and the second electrode is coated or assembled on one side of the selective membrane.
